# EUROPÄISCHE PATENTSCHRIFT

(11) **EP 3 492 398 B1**
(45) Veröffentlichungstag und Bekanntmachung des Hinweises auf die Patenterteilung: **29.07.2020**
(21) Anmeldenummer: 18204829.8
(22) Anmeldetag: 07.11.2018
(51) Int. Cl.: B65B 57/00, B65B 59/04, F16P 1/02

(54) **VERPACKUNGSMASCHINE MIT AUFKLAPPBARER SCHUTZABDECKUNG**
PACKAGING MACHINE WITH OPENABLE SAFETY COVER
MACHINE D'EMBALLAGE POURVUE DE COUVERCLE DE SÉCURITÉ PLIABLE

(30) Priorität: 30.11.2017 DE 102017128363
(43) Veröffentlichungstag der Anmeldung: 05.06.2019
(73) Patentinhaber: MULTIVAC Sepp Haggenmüller SE & Co. KG, 87787 Wolfertschwenden (DE)
(72) Erfinder: WÖLFLE, Manuel, 87493 Lauben (DE)
(74) Vertreter: Grünecker Patent- und Rechtsanwälte PartG mbB

(56) Entgegenhaltungen:
- EP-A1- 2 749 499
- EP-A1- 3 191 371

## Beschreibung

Die Erfindung bezieht sich auf eine Verpackungsmaschine gemäß dem Oberbegriff des Anspruchs 1.

Zur Gewährleistung eines sicheren Produktionsbetriebs werden bisher an einer Verpackungsmaschine, insbesondere an einer Tiefziehverpackungsmaschine oder an einer Schalenverschließmaschine, entlang einer Produktionsstrecke, beispielweise vor und nach einer Form- und/oder Siegelstation, Schutzabdeckungen verwendet, die verhindern können, dass Bediener in den Produktionsfluss hineingreifen. Bisher sind Lösungen bekannt, worin die Schutzabdeckungen lose auf einer Oberseite des Maschinengestells abgelegt sind. Zum Herstellen eines Zugriffs in die Verpackungsmaschine, z. B. zu Reinigungs- und/oder Wartungszwecken, werden die Schutzabdeckungen einfach abgenommen.

Aus Gründen der Hygiene sollten abgenommene Schutzabdeckungen nicht auf dem Boden abgelegt werden. Daher ist, beispielsweise aus der nachveröffentlichten DE 10 2017 106 898.8, bekannt, die Schutzabdeckungen stapelbar auszuführen und so einen vorbestimmten Ablageplatz vorzusehen. Aus der EP 2 749 499 A1 ist bekannt, eine Schutzabdeckung in eine geöffnete Position zu bewegen, in der sie an einer Schalenverschließmaschine gehalten wird.

Eine Aufgabe der Erfindung besteht darin, eine insbesondere im Hinblick auf eine einfache Bedienung, gründliche Reinigung und/oder eine kostengünstige Konstruktion verbesserte Verpackungsmaschine mit Schutzabdeckung anzugeben. Diese Aufgabe wird erfindungsgemäß gelöst durch eine Verpackungsmaschine mit den Merkmalen des Anspruchs 1. Vorteilhafte Weiterbildungen sind in den abhängigen Ansprüchen angegeben.

Die Erfindung bezieht sich auf eine Verpackungsmaschine mit einem Maschinengestell, einem Schutzbereich und einer Schutzabdeckung, welche in einer Schutzposition den Schutzbereich gegen Zugang von außerhalb der Verpackungsmaschine abschirmt, wobei die Schutzabdeckung sowohl vollständig, insbesondere werkzeuglos von dem Maschinengestell abnehmbar als auch an diesem in einer Zugangsposition der Schutzabdeckung arretierbar ist, wobei die Schutzabdeckung in der Zugangsposition Zugang zu dem Schutzbereich der Verpackungsmaschine gestattet. Die Erfindung zeichnet sich dadurch aus, dass an dem Maschinengestell ein Rasthebel angeordnet ist, der dazu konfiguriert ist, die Schutzabdeckung in der Zugangsposition zu halten, wobei sich der Rasthebel durch eine Öffnung in einer Wand der Schutzabdeckung hindurch erstreckt, wenn die Schutzabdeckung in der Zugangsposition angeordnet ist.

Als Maschinengestell kann dabei eine tragende Struktur verstanden werden, die verschiedene Komponenten der Verpackungsmaschine in einer gewünschten geometrischen Relation zueinander anordnet und hält. Insbesondere können die Schutzabdeckung ein oder mehrere Teile der Schutzabdeckung auf dem Maschinengestell aufliegen oder durch dieses gehalten werden. Unter einem Schutzbereich kann ein Bereich verstanden werden, der in der Schutzposition durch die Schutzabdeckung zumindest teilweise umschlossen wird. Insbesondere können dies Bereiche sein, in denen zu bearbeitende und/oder zu befüllende Verpackungsfolien und/oder Verpackungen gefördert werden. Des Weiteren können Bereiche, in denen Fördereinrichtungen, zum Beispiel Förderketten, verlaufen als Schutzbereiche definiert sein.

Ein Schutzbereich muss nicht vollständig durch die Schutzabdeckung umschlossen werden. Er kann zum Beispiel auch zum Teil durch das Maschinengestell oder andere Komponenten der Verpackungsmaschine gegen Zugang von außerhalb der Verpackungsmaschine abgeschirmt sein. Der Schutzbereich kann dabei insbesondere relativ zu dem Maschinengestell definiert sein, d.h. dass der Schutzbereich nur in der Schutzposition durch die Schutzabdeckung zumindest teilweise abgeschirmt wird. Durch Anordnen der Schutzabdeckung in der Zugangsposition kann die Schutzabdeckung von dem Schutzbereich fortbewegt werden und diesen insbesondere freilegen.

Unter Schutzabdeckungen sind z. B. an der Verpackungsmaschine und/oder einem Maschinengestell derselben vorgesehene Komponenten zu verstehen, die Bereiche der Verpackungsmaschine von oben und/oder der Seite abdecken, wie z. B Schutzhauben oder Seitenverkleidungen. Auch Einlegeschablonen, die das Befüllen der produzierten Verpackungen erleichtern, können als Schutzabdeckungen im Sinne der Erfindung angesehen werden.

Es ist vorteilhaft, wenn der Rasthebel vollständig außerhalb des Schutzbereichs angeordnet ist. Dies kann unter Anderem eine verbesserte Hygiene gewährleisten.

Besonders bevorzugt ist eine Variante, in welcher der Rasthebel sowohl von einer Innenseite als auch von einer Außenseite der Schutzabdeckung aus bedienbar ist, wenn die Schutzabdeckung in der Zugangsposition angeordnet ist. Die Begriffe Innenseite und Außenseite sind dabei wie weiter oben bereits erläutert zu verstehen. Eine solche Variante weist den Vorteil auf, dass ein Lösen des Rasthebels und ein Bewegen der Schutzabdeckung in die Schutzposition von beiden Seiten aus möglich sind. Dadurch können Laufwege um die gesamte oder um Teile der Verpackungsmaschine herum vermieden werden.

Außerdem ist es denkbar, dass die Schutzabdeckung durch Schwenken um eine Achse von der Schutzposition in die Zugangsposition bewegbar ist. Eine solche Bewegung kann eine intuitive und durch die Ausnutzung von Hebeleffekten leichtgängige Bedienung ermöglichen.

Besonders günstig ist es, wenn sich die Achse im Wesentlichen parallel zu einer Produktionsrichtung der Verpackungsmaschine erstreckt. Auf diese Weise kann der Schutzbereich besonders gut freigelegt werden, insbesondere bei längeren Maschinen und mehreren hintereinander angeordneten Schutzabdeckungen. Als Produktionsrichtung kann dabei diejenige Richtung verstanden werden, in der sich die Verpackungen und/oder die Rohmaterialien, die durch die Verpackungsmaschine zu Verpackungen verarbeitet werden, bewegen und die unterschiedlichen Bearbeitungsschritte durchlaufen.

Besonders vorteilhaft ist die Erfindung in einer Variante, in der mehrere Schutzabdeckungen hintereinander angeordnet sind. Der Ausdruck "hintereinander" ist dabei bezogen auf die Produktionsrichtung zu verstehen. Insbesondere können eine Schutzabdeckung und eine stromabwärts davon angeordnete weitere Schutzabdeckung als hintereinander angeordnet angesehen werden. Hintereinander angeordnete Schutzabdeckungen können vorzugsweise lückenlos aneinander anliegen, d.h. dass zwischen hintereinander angeordneten Schutzabdeckungen ein in Produktionsrichtung gemessener Abstand von zum Beispiel nicht größer als 8 mm vorgesehen sein kann. Besonders vorteilhaft ist die Erfindung in einer Variante, in der mehrere Schutzabdeckungen entlang einer Produktionsrichtung hintereinander angeordnet sind.

Besonders günstig ist es, wenn die mehreren Schutzabdeckungen um eine gemeinsame Achse schwenkbar sind. Auf diese Weise können Kollisionen zwischen den Schutzabdeckungen beim Schwenken verhindert werden. Dies ist insbesondere bei hintereinander angeordneten Schutzabdeckungen vorteilhaft.

In einer weiteren Variante kann der Rasthebel schwenkbar an dem Maschinengestell gelagert sein. Dies kann die Bedienung vereinfachen, zum Beispiel indem Verkantungen vermieden oder leichter wieder aufgelöst werden können. Wie später noch erläutert werden wird, kann auf diese Weise außerdem eine Entriegelungsfunktion ermöglicht werden.

Es ist denkbar, dass der Rasthebel eine Rastöffnung aufweist, die zum Eingreifen mit einem Vorsprung konfiguriert ist, der sich in die Öffnung hinein erstreckt, wobei durch den Eingriff zwischen der Rastöffnung und dem Rastvorsprung die Schutzabdeckung in der Zugangsposition gehalten wird. Eine solche Konfiguration vereint eine einfache Herstellung der jeweiligen Komponenten mit einer durch einfache Reinigung verbesserten Hygiene sowie einer sicheren Arretierung.

Vorteilhaft ist es, wenn ein erster Abschnitt des Rasthebels, der sich in der Zugangsposition auf einer Innenseite der Schutzabdeckung erstreckt, eine erste Breite aufweist, die kleiner ist als eine zweite Breite eines zweiten Abschnitts des Rasthebels, der sich in der Zugangsposition zumindest teilweise, vorzugsweise überwiegend auf einer Außenseite der Schutzabdeckung erstreckt. Der Übergang zwischen dem ersten Abschnitt des Rasthebels und dem zweiten Abschnitt des Rasthebels kann zum Beispiel stufenförmig sein. Unabhängig von der Form des Übergangs kann dieser auf eine vorgesehene Endposition, zum Beispiel die Zugangsposition, hinweisen.

Als eine Innenseite der Schutzabdeckung ist dabei eine Seite der Schutzabdeckung zu verstehen, die in der Schutzposition zum Schutzbereich hinweist. Eine Außenseite ist als eine Seite der Schutzabdeckung zu verstehen, die in der Schutzposition zum Äußeren der Verpackungsmaschine hinweist. Sowohl die Innenseite als auch die Außenseite können relativ zu der Schutzabdeckung definiert sein, sodass die Innenseite in der Zugangsposition zum Beispiel nur noch teilweise zum Schutzbereich weist.

In einer weiteren Variante kann die Öffnung einen ersten Öffnungsabschnitt und einen zweiten Öffnungsabschnitt aufweisen, wobei der erste Öffnungsabschnitt eine erste Innenbreite aufweist, die kleiner ist als eine zweite Innenbreite des zweiten Öffnungsabschnitts. Insbesondere im Zusammenspiel mit den Abschnitten des Rasthebels können dadurch ein oder mehrere Anschläge zwischen der Öffnung und dem Rasthebel vorgesehen sein.

Besonders vorteilhaft ist es, wenn die erste Breite des ersten Abschnitts des Rasthebels kleiner ist als die erste Innenbreite des ersten Öffnungsabschnitts der Öffnung und die zweite Breite des zweiten Abschnitts des Rasthebels größer ist als die erste Innenbreite des ersten Öffnungsabschnitts der Öffnung. Dadurch kann der erste Abschnitt des Rasthebels durch den ersten Öffnungsabschnitt der Öffnung geführt werden bis die Bewegung durch den zweiten Abschnitt des Rasthebels blockiert wird, wodurch eine Endposition oder eine Zwischenposition angezeigt werden kann.

Es ist denkbar, dass die Rastöffnung des Rasthebels vorzugsweise vollständig in dem ersten Abschnitt des Rasthebels angeordnet ist. Besonders bevorzugt ist eine Konfiguration, in der die Rastöffnung des Rasthebels mit dem Vorsprung ausgerichtet ist, wenn der zweite Abschnitt des Rasthebels an den Rand der Öffnung anschlägt. Auf diese Weise kann gewährleistet werden, dass der Eingriff zwischen dem Vorsprung und der Rastöffnung erfolgt.

In einer weiteren vorteilhaften Variante ist die zweite Innenbreite des zweiten Abschnitts der Öffnung größer als die zweite Breite des zweiten Abschnitts des Rasthebels. Dadurch kann verhindert werden, dass bei erfolgtem Eingriff zwischen der Rastöffnung und dem Vorsprung ein unabsichtliches Lösen dieses Eingriffs erfolgt.

Es ist denkbar, dass eine Länge des Vorsprungs größer ist als eine Länge des zweiten Öffnungsabschnitts. Die Begriffe Länge und Breite können hier so zu verstehen sein, dass diese Größen rechtwinklig zueinander gemessen werden. Dies gilt für alle genannten Breiten und Längen an allen Komponenten.

Die Erfindung bezieht sich auf eine Verpackungsmaschine der vorstehend beschriebenen Art. Im Folgenden wird ein bevorzugtes Ausführungsbeispiel anhand von Figuren näher erläutert.
- Figur 1: zeigt eine schematische Seitenansicht einer erfindungsgemäßen Verpackungsmaschine gemäß einem Ausführungsbeispiel.
- Figur 2: zeigt eine perspektivische Ansicht einer Schutzabdeckung.
- Figur 3A: zeigt eine Schnittansicht von Teilen der in Figur 1 dargestellten Verpackungsmaschine aus der durch die mit III markierten Pfeile angedeuteten Perspektive.
- Figur 3B: zeigt die Ansicht aus Figur 3A mit der Schutzabdeckung in Zugangsposition.
- Figur 4: zeigt eine perspektivische Ansicht der Schutzabdeckung in Zugangsposition.
- Figur 5A: zeigt eine Detailansicht des in Figur 4 mit V gekennzeichneten Bereichs in einer Raststellung des Rasthebels.
- Figur 5B: zeigt die Ansicht aus Figur 5A mit dem Rasthebel in einer Lösestellung.
- Figur 6: zeigt eine schematische Darstellung des Rasthebels.

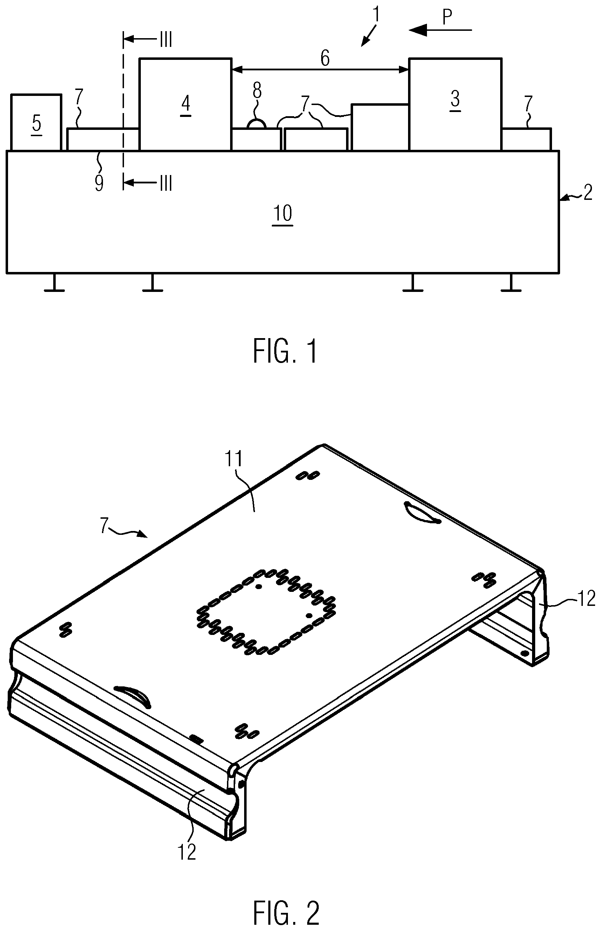

Fig. 1 zeigt schematisch eine Seitenansicht einer Bedienseite einer erfindungsgemäßen Verpackungsmaschine 1, die im vorliegenden Ausführungsbeispiel als Tiefziehverpackungsmaschine ausgebildet ist. Die Verpackungsmaschine 1 kann ein Maschinengestell 2, eine Formstation 3, eine Siegelstation 4 und eine Schneidstation 5 umfassen. Die Formstation 3 kann Mulden in eine nicht näher dargestellte Unterfolie formen. Entlang einer Einlegestrecke 6 können die Mulden der Unterfolie mit Produkten befüllt werden. An der Siegelstation 4 kann eine nicht näher dargestellte Deckelfolie auf die Unterfolie gesiegelt werden. Dies kann erfolgen, nachdem das Muldeninnere evakuiert und/oder begast wurde, beispielsweise, um die Haltbarkeit bei Lebensmitteln zu erhöhen. Die im Folienverbund der Unter- und Deckelfolie ausgebildeten Verpackungen können an der Schneidstation 5 vereinzelt und aus der Verpackungsmaschine 1 maschinell heraustransportiert oder dieser manuell entnommen werden.

Gewisse Bereiche, z. B direkt vor oder nach der Formstation 3, der Siegelstation 4 und/oder der Schneidstation 5, müssen während des Betriebs vor einem Eingriff von oben durch einen Bediener geschützt werden, um beispielsweise Verletzungen bei einem Eingriff in ein Hubwerk zu verhindern. Dafür können Schutzabdeckungen 7 an beliebigen Abschnitten der Verpackungsmaschine 1 vorgesehen sein, an denen sie notwendig oder hilfreich sind, insbesondere vor und/oder nach der Formstation 3 und/oder vor und/oder nach der Siegelstation 4. Wie in Figur 1 dargestellt, können auch mehrere Schutzabdeckungen 7 hintereinander angeordnet sein, zum Beispiel um die gesamte Einlegestrecke 6 abzudecken.

Zu Wartungs-, Umbau- oder Reinigungszwecken können die lose auf dem Maschinengestell 2 aufgelegten Schutzabdeckungen 7 aus ihrer Position entfernt werden. Vornehmlich aus hygienischen Gründen ist es aber nicht gewünscht, dass die Schutzabdeckungen 7 auf den Boden neben die Verpackungsmaschine 1 gelegt werden. Vor allem bei einer wie üblich täglich durchgeführten Reinigung der Verpackungsmaschine 1 müssen die Schutzabdeckungen 7 von ihrer Schutzposition abgenommen oder fortbewegt werden, um einen Schutzbereich darunter für die Reinigung zugänglich zu machen. Dabei sollten auch die Schutzabdeckungen 7 selbst günstig für die Reinigung positioniert sein.

Die Schutzabdeckungen 7 gemäß Fig. 1 können je nach der zu schützenden Zone unterschiedlich groß ausgebildet sein. Dabei können die jeweiligen Schutzabdeckungen 7 jedoch in Produktionsrichtung P betrachtet gleich breit ausgebildet sein. Fig. 1 deutet jedoch an, dass die jeweiligen Schutzabdeckungen 7 in Produktionsrichtung P betrachtet unterschiedlich tief und/oder hoch ausgebildet sein können. Auch gleich große Schutzabdeckungen 7 sind denkbar.

Die beispielhaft in Fig. 1 vor der Siegelstation 4 positionierte Schutzabdeckung 7 kann einen Griff 8 aufweisen, der einem Bediener das Anheben der Schutzabdeckung 7 erleichtert. Der Griff 8 kann auch an den anderen Schutzabdeckungen 7 der Fig. 1 vorgesehen sein. Fig. 1 zeigt auch, dass die jeweiligen Schutzabdeckungen 7 auf einer Oberseite 9 eines Seitenrahmens 10 der Verpackungsmaschine 1 aufgesetzt ein können. Der Seitenrahmen 10 kann einen Teil des Maschinengestells 2 der Verpackungsmaschine 1 ausbilden.

In Figur 2 ist eine perspektivische Ansicht einer der Schutzabdeckungen 7 dargestellt. Diese kann, wie im vorliegenden Ausführungsbeispiel, einen Deckel 11 aufweisen. Des Weiteren können beispielsweise zwei Seitenwände 12 vorgesehen sein, die eine Beabstandung des Deckels 11 von der herzustellenden Verpackung und/oder von dem Maschinengestell 2 gewährleisten. Dies kann jedoch auch durch andere Vorrichtungen gewährleistet werden, beispielsweise durch eine bogenförmige Gestaltung des Deckels 11.

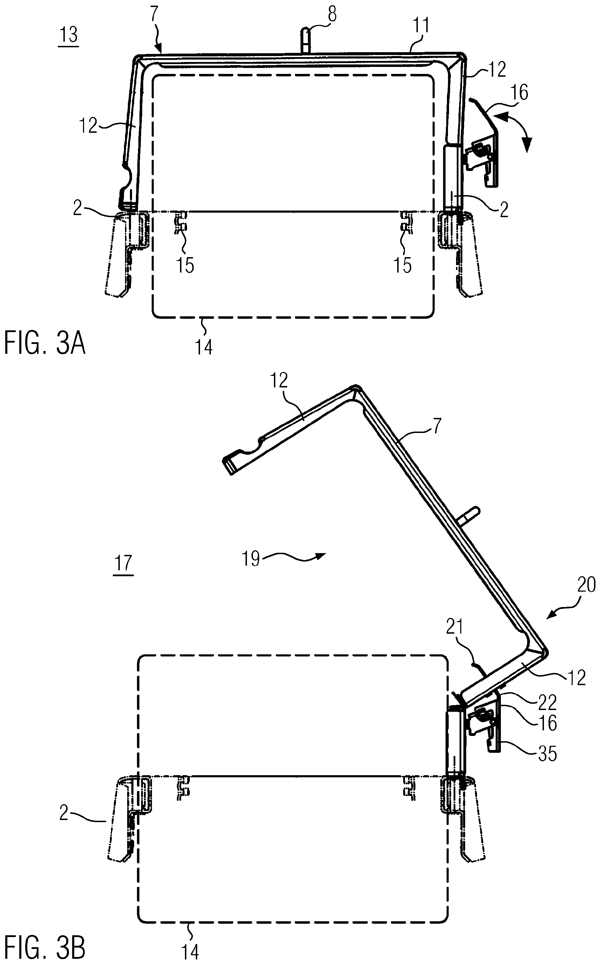

Figur 3A zeigt eine Schnittansicht aus der in Figur 1 durch die mit III gekennzeichneten Pfeile angegebenen Perspektive. In dieser Ansicht ist die Schutzabdeckung 7 in einer Schutzposition 13 angeordnet. Durch die unterbrochene Linie ist ein Schutzbereich 14 kenntlich gemacht. So wird deutlich, dass der Schutzbereich 14 durch die Schutzabdeckung 7, wie im vorliegenden Ausführungsbeispiel, zumindest teilweise gegen Zugang von außerhalb der Verpackungsmaschine 1 abgeschirmt ist. An den Stellen, an denen der Schutzbereich 14 nicht durch die Schutzabdeckung 7 abgeschirmt ist, ist er durch das Maschinengestell 2 abgeschirmt. In dem Schutzbereich 14 können beispielsweise Förderketten 15 angeordnet sein. Durch die Förderketten 15 kann beispielsweise ein Folienverbund/oder aber eine Folie mit darin geformten Mulden gefördert werden. Diese sind jedoch zur besseren Übersichtlichkeit in Figur 3A nicht dargestellt. An dem Maschinengestell 2 kann, wie im vorliegenden Ausführungsbeispiel, ein Rasthebel 16 angeordnet sein. Durch die Pfeile ist angedeutet, dass der Rasthebel 16 schwenkbar an dem Maschinengestell 2 gelagert sein kann.

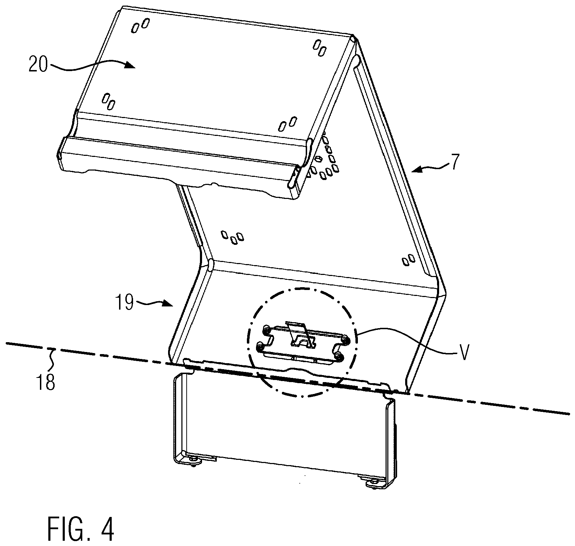

Die Perspektive von Figur 3B entspricht derjenigen aus Figur 3A. In Figur 3B ist jedoch die Schutzabdeckung 7 in einer Zugangsposition 17 dargestellt. Dazu kann die Schutzabdeckung 7, wie im Ausführungsbeispiel, um eine Achse 18 (siehe Figur 4) schwenkbar ausgeführt sein. Es ist erkennbar, dass sich der Schutzbereich 14 nicht mit der Schutzabdeckung 7 bewegt hat, da dieser mit Bezug auf das Maschinengestell 2 definiert ist. Durch das Anordnen der Schutzabdeckung 7 in der Zugangsposition kann somit, wie im vorliegenden Ausführungsbeispiel, der Schutzbereich 14 freilegbar sein. Anders ausgedrückt, kann die Schutzabdeckung in der Zugangsposition Zugang zu dem Schutzbereich der Verpackungsmaschine gestatten.

An der Schutzabdeckung 7 kann eine Innenseite 19 definiert sein. Diese kann insbesondere relativ zu der Schutzabdeckung 7 definiert sein. In Figur 3A weist die Innenseite 19 zum Schutzbereich 14 hin. In Figur 3B wird ersichtlich, dass die Innenseite 19 in der Zugangsposition der Schutzabdeckung 7 nicht ausschließlich zum Schutzbereich 14 hinweist. Der Innenseite 19 gegenüberliegend kann eine Außenseite 20 der Schutzabdeckung 7 definiert sein. Diese weist zur Umgebung der Verpackungsmaschine 1.

Es ist erkennbar, dass sich der Rasthebel 16 durch die Seitenwand 12 hindurch erstreckt. Dadurch kann ein erster Abschnitt 21 des Rasthebels 16 auf der Innenseite 19 der Schutzabdeckung angeordnet sein. Ein zweiter Abschnitt 22 des Rasthebels 16 kann zumindest teilweise auf der Außenseite 20 der Schutzabdeckung 7 angeordnet sein. Dies kann einen Zugang durch einen Bediener zum Rasthebel 16 sowohl von der Innenseite 19 der Schutzabdeckung 7 aus als auch von der Außenseite 20 der Schutzabdeckung 7 aus ermöglichen.

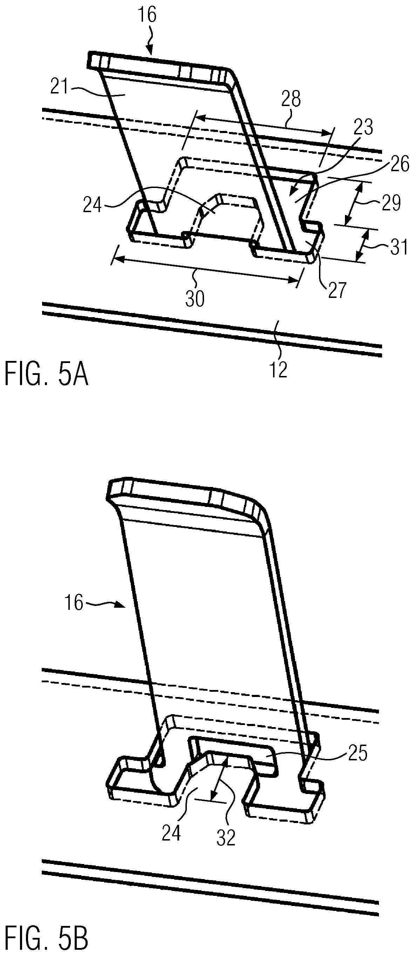

In Figur 4 ist die Schutzabdeckung 7 in einer perspektivischen Darstellung gezeigt. Es ist im Wesentlichen die Innenseite 19 zu sehen. Der mit V gekennzeichnete Bereich ist in den Figuren 5A und 5B zur detaillierteren Erläuterung des Eingriffs zwischen dem Rasthebel 16 und der Schutzabdeckung 7 vergrößert dargestellt.

In der Figur 5A ist der Rasthebel 16 in einer Raststellung dargestellt. Er erstreckt sich durch eine Öffnung 23, die im vorliegenden Ausführungsbeispiel in der Seitenwand 12 vorgesehen ist. Dies ist jedoch lediglich beispielhaft zu verstehen. Die Öffnung 23 kann in einer beliebigen geeigneten Wand der Schutzabdeckung 7 vorgesehen sein. Ein Vorsprung 24 kann sich, wie im vorliegenden Ausführungsbeispiel, in die Öffnung 23 hinein erstrecken. In der in Figur 5A dargestellten Raststellung des Rasthebels 16 befindet sich der Vorsprung 24 im Eingriff mit dem Rasthebel 16. Dazu kann in dem Rasthebel 16 eine Rastöffnung 25 (siehe Figur 5B) vorgesehen sein. Die Öffnung 23 kann einen ersten Öffnungsabschnitt 26 und einen zweiten Öffnungsabschnitt 27 umfassen. Der erste Öffnungsabschnitt 26 kann eine erste Innenbreite 28 sowie eine erste Öffnungslänge 29 aufweisen. Der zweite Öffnungsabschnitt 27 kann eine zweite Innenbreite 30 sowie eine zweite Öffnungslänge 31 aufweisen.

Wie im vorliegenden Ausführungsbeispiel kann die erste Innenbreite 28 kleiner sein als die zweite Innenbreite 30. Der Vorsprung 24 kann sich im Wesentlichen, vorzugsweise zumindest zu einem Großteil, besonders bevorzugt zu mehr als der Hälfte in dem zweiten Öffnungsabschnitt erstrecken. Besonders vorteilhaft ist die im Ausführungsbeispiel dargestellte Ausdehnung in Richtung der beiden Öffnungslängen 29, 31. Der Vorsprung 24 kann eine Länge 32 (siehe Figur 5B) aufweisen, die größer sein kann als die zweite Öffnungslänge 31. Die genannten Längen können dabei insbesondere rechtwinklig zu den genannten Breiten gemessen werden.

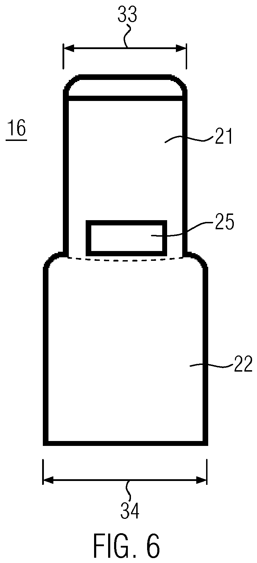

Figur 6 zeigt eine schematische Darstellung des Rasthebels 16 mit dem ersten Abschnitt 21 und dem zweiten Abschnitt 22. Die Grenze zwischen diesen beiden Abschnitten ist durch eine unterbrochene Linie gekennzeichnet. Der erste Abschnitt 21 kann eine erste Breite 33 aufweisen. Der zweite Abschnitt 22 kann eine zweite Breite 34 aufweisen. Wie im dargestellten Ausführungsbeispiel kann die zweite Breite 34 größer sein als die erste Breite 33. Die erste Breite 33 kann dabei insbesondere kleiner sein als die erste Innenbreite 28 des ersten Öffnungsabschnitts 26. Dies kann ein Durchführen des ersten Abschnitts 21 des Rasthebels 16 durch die Öffnung 23, insbesondere durch den ersten Öffnungsabschnitt 26 ermöglichen. Die zweite Breite 34 des zweiten Abschnitts 22 kann insbesondere größer sein als die erste Innenbreite 28 des ersten Öffnungsabschnitts 26. Dadurch kann ein Anschlag vorgesehen werden.

Wie in Figur 6 zu erkennen, kann die Rastöffnung 25 vollständig in dem ersten Abschnitt 21 vorgesehen sein. Insbesondere kann sie in der Nähe des Übergangs zwischen dem ersten Abschnitt 21 und dem zweiten Abschnitt 22 vorgesehen sein. Besonders günstig ist es, wenn, wie im Ausführungsbeispiel, die Rastöffnung 25 auf den Vorsprung 24 ausgerichtet ist, wenn der Übergang zwischen dem ersten Abschnitt 21 und dem zweiten Abschnitt 22 an der Seitenwand 12 der Schutzabdeckung 7 anliegt. Wenn der Vorsprung 24 und die Rastöffnung 25 aufeinander ausgerichtet sind, kann der Rasthebel 16 aus der in Figur 5B gezeigten Lösestellung in die in Figur 5A gezeigte Raststellung bewegt werden. So werden der Rasthebel 16 und der Vorsprung 24 in Eingriff gebracht und die Schutzabdeckung 7 in der Zugangsposition arretiert.

In einer besonders bevorzugten Variante kann die zweite Breite 34 des zweiten Abschnitts 22 kleiner sein als die zweite Innenbreite 30 des zweiten Öffnungsabschnitts 27. Dadurch kann es ermöglicht werden, dass der Rasthebel 16 weiter durch die Öffnung 23 hindurch bewegt wird, bis sich auch ein Teil des zweiten Abschnitts 22 durch die Öffnung 23, insbesondere durch den zweiten Öffnungsabschnitt 27 erstreckt. Da das Spiel des zweiten Abschnitts 22 in der Öffnung 31 kleiner ist als die Länge des Vorsprungs 24, kann ein unbeabsichtigtes Bewegen des Rasthebels 16 in die Lösestellung verhindert werden. Folglich kann die Schutzabdeckung 7 nur durch gezielten manuellen Eingriff am Rasthebel 16 entriegelt werden.

Ein Bediener kann den Rasthebel 16 auf unterschiedliche Arten von der Raststellung in die Lösestellung bewegen. Zum Einen ist es möglich, von der Innenseite 19 aus den Rasthebel 16 direkt außer Eingriff mit dem Vorsprung 24 zu bewegen. Zum Anderen kann der Rasthebel 16 durch Druck auf einen Taster 35 (siehe Figur 3B) von der Außenseite 20 der Schutzabdeckung 7 aus in die Lösestellung gebracht werden. Dazu kann durch Druck auf den Taster 35 der schwenkbar an dem Maschinengestell 2 angebrachte Rasthebel 16 geschwenkt werden. Es ist denkbar, dass der Rasthebel 16 in Richtung der Rastposition vorgespannt ist, beispielsweise durch eine Feder.

## Patentansprüche

1. Verpackungsmaschine (1) mit einem Maschinengestell (2) und einer Schutzabdeckung (7), welche in einer Schutzposition (13) einen Schutzbereich (14) der Verpackungsmaschine (1) zumindest teilweise gegen Zugang von außerhalb der Verpackungsmaschine (1) abschirmt, wobei die Schutzabdeckung (7) sowohl vollständig von dem Maschinengestell (2) abnehmbar als auch an diesem in einer Zugangsposition (17) der Schutzabdeckung (7) arretierbar ist, wobei die Schutzabdeckung (7) in der Zugangsposition (17) Zugang zu dem Schutzbereich (14) der Verpackungsmaschine (1) gestattet, **dadurch gekennzeichnet, dass** an dem Maschinengestell (2) ein Rasthebel (16) angeordnet ist, der dazu konfiguriert ist, die Schutzabdeckung (8) in der Zugangsposition (17) zu halten, wobei sich der Rasthebel (16) durch eine Öffnung (23) in einer Wand (12) der Schutzabdeckung (7) hindurch erstreckt, wenn die Schutzabdeckung (7) in der Zugangsposition (17) angeordnet ist.

2. Verpackungsmaschine nach Anspruch 1, **dadurch gekennzeichnet, dass** der Rasthebel (16) vollständig außerhalb des Schutzbereichs (14) angeordnet ist.

3. Verpackungsmaschine nach einem der vorangehenden Ansprüche, **dadurch gekennzeichnet, dass** der Rasthebel (16) sowohl von einer Innenseite (19) als auch von einer Außenseite (20) der Schutzabdeckung (7) aus bedienbar ist, wenn die Schutzabdeckung (7) in der Zugangsposition (17) angeordnet ist.

4. Verpackungsmaschine nach einem der vorangehenden Ansprüche, **dadurch gekennzeichnet, dass** die Schutzabdeckung (7) durch Schwenken um eine Achse (18) von der Schutzposition (13) in die Zugangsposition (17) bewegbar ist.

5. Verpackungsmaschine nach Anspruch 4, **dadurch gekennzeichnet, dass** die Achse (18) sich im Wesentlichen parallel zu einer Produktionsrichtung (R) der Verpackungsmaschine (1) erstreckt.

6. Verpackungsmaschine nach einem der vorangehenden Ansprüche, **dadurch gekennzeichnet, dass** mehrere Schutzabdeckungen (7) hintereinander angeordnet sind.

7. Verpackungsmaschine nach einem der vorangehenden Ansprüche, **dadurch gekennzeichnet, dass** mehrere Schutzabdeckungen (7) entlang einer Produktionsrichtung (R) hintereinander angeordnet sind.

8. Verpackungsmaschine nach Anspruch 6 oder 7, **dadurch gekennzeichnet, dass** die mehreren Schutzabdeckungen (7) um eine gemeinsame Achse (18) schwenkbar sind.

9. Verpackungsmaschine nach einem der vorangehenden Ansprüche, **dadurch gekennzeichnet, dass** der Rasthebel (16) schwenkbar an dem Maschinengestell (2) gelagert ist.

10. Verpackungsmaschine nach einem der vorangehenden Ansprüche, **dadurch gekennzeichnet, dass** der Rasthebel (16) eine Rastöffnung (25) aufweist, die zum Eingreifen mit einem Vorsprung (24) konfiguriert ist, der sich in die Öffnung (23) hinein erstreckt, wobei durch den Eingriff zwischen der Rastöffnung (25) und dem Rastvorsprung (24) die Schutzabdeckung (7) in der Zugangsposition (17) gehalten wird.

11. Verpackungsmaschine nach einem der vorangehenden Ansprüche, **dadurch gekennzeichnet, dass** ein erster Abschnitt (21) des Rasthebels (16), der sich in der Zugangsposition (17) auf einer Innenseite (19) der Schutzabdeckung (7) erstreckt, eine erste Breite (33) aufweist, die kleiner ist als eine zweite Breite (34) eines zweiten Abschnitts (22) des Rasthebels (16), der sich in der Zugangsposition (17) auf einer Außenseite (20) der Schutzabdeckung (7) erstreckt.

12. Verpackungsmaschine nach einem der vorangehenden Ansprüche, **dadurch gekennzeichnet, dass** die Öffnung (23) einen ersten Öffnungsabschnitt (26) und einen zweiten Öffnungsabschnitt (27) aufweist, wobei der erste Öffnungsabschnitt (26) eine erste Innenbreite (28) aufweist, die kleiner ist als eine zweite Innenbreite (30) des zweiten Öffnungsabschnitts (27).

13. Verpackungsmaschine nach den Ansprüchen 11 und 12, **dadurch gekennzeichnet, dass** die erste Breite (33) des ersten Abschnitts (21) des Rasthebels (16) kleiner ist als die erste Innenbreite (28) des ersten Öffnungsabschnitts (26) der Öffnung (23) und die zweite Breite (34) des zweiten Abschnitts (22) des Rasthebels (16) größer ist als die erste Innenbreite (28) des ersten Öffnungsabschnitts (26) der Öffnung (23).

14. Verpackungsmaschine nach Anspruch 13, **dadurch gekennzeichnet, dass** die zweite Innenbreite (30) des zweiten Öffnungsabschnitts (27) der Öffnung (23) größer ist als die zweite Breite (34) des zweiten Abschnitts (22) des Rasthebels (16).

15. Verpackungsmaschine nach den Ansprüchen 10 und 12, **dadurch gekennzeichnet, dass** eine Länge (32) des Vorsprungs (24) größer ist als eine Öffnungslänge (31) des zweiten Öffnungsabschnitts (27).

## Claims

1. A packaging machine (1) comprising a machine frame (2) and a protective cover (7), which, at a protective position (13), at least partially shields an area of protection (14) of the packaging machine (1) against access from outside the packaging machine (1), wherein the protective cover (7) is fully removable from the machine frame (2) as well as lockable on the latter at an access position (17) of the protective cover (7), and wherein the protective cover (7), when occupying the access position (17), allows access to the area of protection (14) of the packaging machine (1), **characterized in that** the machine frame (2) has arranged thereon a locking lever (16), which is configured for retaining the protective cover (7) at the access position (17), the locking lever (16) extending through an opening (23) in a wall (12) of the protective cover (7), when the protective cover (7) is arranged at the access position (17).

2. The packaging machine according to claim 1, **characterized in that** the locking lever (16) is arranged fully outside the area of protection (14).

3. The packaging machine according to one of the preceding claims, **characterized in that** the locking lever (16) can be operated from both an inner side (19) and an outer side (20) of the protective cover (7), when the protective cover (7) is arranged at the access position (17).

4. The packaging machine according to one of the preceding claims, **characterized in that** the protective cover (7) can be moved from the protective position (13) to the access position (17) by a pivotal movement about an axis (18).

5. The packaging machine according to claim 4, **characterized in that** the axis (18) extends substantially parallel to a production direction (P) of the packaging machine (1).

6. The packaging machine according to one of the preceding claims, **characterized in that** a plurality of protective covers (7) are arranged in succession.

7. The packaging machine according to one of the preceding claims, **characterized in that** a plurality of protective covers (7) are arranged in succession along a production direction (P).

8. The packaging machine according to claim 6 or 7, **characterized in that** the plurality of protective covers (7) are pivotable about a common axis (18).

9. The packaging machine according to one of the preceding claims, **characterized in that** the locking lever (16) is pivotably supported on the machine frame (2).

10. The packaging machine according to one of the preceding claims, **characterized in that** the locking lever (16) has a locking opening (25), which is configured for engagement with a projection (24) that extends into the opening (23), the protective cover (7) being retained at the access position (17) through the engagement between the locking opening (25) and the locking projection (24).

11. The packaging machine according to one of the preceding claims, **characterized in that** a first portion (21) of the locking lever (16), which extends on an inner side (19) of the protective cover (7) at the access position (17), has a first width (33) that is smaller than a second width (34) of a second portion (22) of the locking lever (16), which extends on an outer side (20) of the protective cover (7) at the access position (17).

12. The packaging machine according to one of the preceding claims, **characterized in that** the opening (23) comprises a first opening section (26) and a second opening section (27), the first opening section (26) having a first internal width (28) which is smaller than a second internal width (30) of the second opening section (27).

13. The packaging machine according to claims 11 and 12, **characterized in that** the first width (33) of the first portion (21) of the locking lever (16) is smaller than the first internal width (28) of the first opening section (26) of the opening (23) and that the second width (34) of the second portion (22) of the locking lever (16) is larger than the first internal width (28) of the first opening section (26) of the opening (23).

14. The packaging machine according to claim 13, **characterized in that** the second internal width (30) of the second opening section (27) of the opening (23) is larger than the second width (34) of the second portion (22) of the locking lever (16).

15. The packaging machine according to claims 10 and 12, **characterized in that** a length (32) of the projection (24) is larger than an opening length (31) of the second opening section (27).

## Revendications

1. Machine d'emballage (1) avec un bâti de machine (2) et un couvercle de sécurité (7) qui, dans une position de sécurité (13), protège au moins partiellement une zone de sécurité (14) de la machine d'emballage (1) contre l'accès depuis l'extérieur de la machine d'emballage, le couvercle de sécurité (7) étant à la fois complètement amovible du bâti de la machine et verrouillable sur celui-ci dans une position d'accès (17) du couvercle de sécurité (7), dans lequel le couvercle de sécurité (7) en position d'accès (17) permet d'accéder à la zone de sécurité (14) de la machine d'emballage (1), **caractérisé en ce qu'**un levier de verrouillage (16) est disposé sur le bâti de la machine (2), qui est configuré pour maintenir le couvercle de sécurité (8) en position d'accès (17), dans lequel le levier de verrouillage (16) s'étend à travers une ouverture (23) dans une paroi (12) du couvercle de sécurité (7) lorsque le couvercle de sécurité (7) est disposé en position d'accès (17).

2. Machine d'emballage selon la revendication 1, **caractérisée en ce que** le levier de verrouillage (16) est disposé complètement à l'extérieur de la zone de sécurité (14).

3. Machine d'emballage selon l'une des revendications précédentes, **caractérisée en ce que** le levier de verrouillage (16) est actionnable à la fois depuis un côté intérieur (19) et un côté extérieur (20) du couvercle de sécurité (7) lorsque le couvercle de sécurité (7) est disposé en position d'accès (17).

4. Machine d'emballage selon l'une des revendications précédentes, **caractérisée en ce que** le couvercle de sécurité (7) est déplaçable de la position de sécurité (13) à la position d'accès (17) par pivotement autour d'un axe (18).

5. Machine d'emballage selon la revendication 4, **caractérisée en ce que** l'axe (18) s'étend sensiblement parallèlement à une direction de production (R) de la machine d'emballage (1).

6. Machine d'emballage selon l'une des revendications précédentes, **caractérisée en ce que** plusieurs couvercles de sécurité (7) sont disposés les uns derrière les autres.

7. Machine d'emballage selon l'une des revendications précédentes, **caractérisée en ce que** plusieurs couvercles de sécurité (7) sont disposés les uns derrière les autres le long d'une direction de production (R).

8. Machine d'emballage selon les revendications 6 ou 7, **caractérisée en ce que** la pluralité de couvercles de sécurité (7) peuvent pivoter autour d'un axe commun (18).

9. Machine d'emballage selon l'une des revendications précédentes, **caractérisée en ce que** le levier de verrouillage (16) est monté de manière pivotante sur le châssis de la machine (2).

10. Machine d'emballage selon l'une des revendications précédentes, **caractérisée en ce que** le levier de verrouillage (16) présente une ouverture de verrouillage (25) configurée pour s'engager avec une saillie (24) s'étendant dans l'ouverture (23), l'engagement entre l'ouverture de verrouillage (25) et la saillie de verrouillage (24) maintenant le couvercle de sécurité (7) dans la position d'accès (17).

11. Machine d'emballage selon l'une des revendications précédentes, **caractérisée en ce qu'**une première partie (21) du levier de verrouillage (16), qui en position d'accès (17) s'étend sur un côté intérieur (19) du couvercle de sécurité (7), a une première largeur (33) qui est inférieure à une seconde largeur (34) d'une seconde partie (22) du levier de verrouillage (16), qui en position d'accès (17) s'étend sur un côté extérieur (20) du couvercle de sécurité (7).

12. Machine d'emballage selon l'une des revendications précédentes, **caractérisée en ce que** l'ouverture (23) comprend une première partie d'ouverture (26) et une seconde partie d'ouverture (27), la première partie d'ouverture (26) ayant une première largeur interne (28) inférieure à une seconde largeur interne (30) de la seconde partie d'ouverture (27).

13. Machine d'emballage selon les revendications 11 et 12, **caractérisée en ce que** la première largeur (33) de la première section (21) du levier de verrouillage (16) est inférieure à la première largeur intérieure (28) de la première section d'ouverture (26) de l'ouverture (23) et la seconde largeur (34) de la seconde section (22) du levier de verrouillage (16) est supérieure à la première largeur intérieure (28) de la première section d'ouverture (26) de l'ouverture (23).

14. Machine d'emballage selon la revendication 13, **caractérisée en ce que** la seconde largeur intérieure (30) de la seconde partie d'ouverture (27) de l'ouverture (23) est supérieure à la seconde largeur (34) de la seconde partie (22) du levier de verrouillage (16).

15. Machine d'emballage selon les revendications 10 et 12, **caractérisée en ce qu'**une longueur (32) de la saillie (24) est supérieure à une longueur d'ouverture (31) de la seconde partie d'ouverture (27).
